# EUROPEAN PATENT SPECIFICATION

(11) **EP 3 579 363 B1**
(45) Date of publication and mention of the grant of the patent: **28.07.2021**
(21) Application number: 18305696.9
(22) Date of filing: 08.06.2018
(51) Int. Cl.: H02G 1/02, H02G 7/00

(54) **AIRCRAFT WARNING LIGHT FOR POWER LINES**
FLUGZEUGWARNLEUCHTE FÜR HOCHSPANNUNGSLEITUNGEN
AVERTISSEUR LUMINEUX D'AÉRONEF POUR LIGNES D'ALIMENTATION

(43) Date of publication of application: 11.12.2019
(73) Proprietor: Tyco Electronics-Simel, 21220 Gevrey Chambertin (FR)
(72) Inventor: ROYER, Laurent, 21580 Courlon (FR)
(74) Representative: Grünecker Patent- und Rechtsanwälte PartG mbB

(56) References cited:
- JP-A- 2001 268 760
- US-A- 2 177 858
- US-A- 3 114 893
- Delta Box: "Obstruction lights high voltage lines", , 1 January 2017 (2017-01-01), XP055527232, Retrieved from the Internet: URL:http://www.delta-box.com/en/wp-content /uploads/sites/2/2017/07/delta-box-lbia00h t-type-a-10-cd.pdf [retrieved on 2018-11-27]
- Delta Box: "BHT marking light for High Voltage", , 1 January 2017 (2017-01-01), XP055527652, Retrieved from the Internet: URL:https://web.archive.org/web/2018040723 4538/http://www.delta-box.com:80/en/markin g/bht-marking-light-for-high-voltage-line/ [retrieved on 2018-11-27]

## Description

The present invention relates to a suspended light system for signalization of power lines to the aircrafts near airports or aviation corridors, and to a method for installing such a light system at a power line, in particular an alternating current (AC) line.

Two different types of lighting systems are available on the market. The first type of systems is based on capacitive technology. Each high voltage cable creates an electric field around itself, in the same way as any live electrical conductor. When the electric potential of such a cable is sufficiently high, its electric field causes a significant voltage difference between the cable and its immediate surroundings.

As a result, a second conductor, or a capacitor shunt, which is a few meters long, insulated from but parallel to the high voltage cable, will have a potential difference from that of the main cable. Together, the conductors form a capacitor charged across an air gap (the air being a dielectric). The accumulated charge and hence the potential difference is sufficient to trigger a gas discharge lamp (GDL).

This system is proven, however, it has disadvantages, such as a long installation time and its complexity in terms of number of components attached to the line which are permanently submitted to aeolian movements of the line. Furthermore, the lifetime of the gas discharge lamp is limited and the lighting system therefore must be subjected to periodic maintenance operation at high costs, considering those operations must be carried-out avoiding switching-off the power line. Another disadvantage is the limitation of voltage of the line, because the higher the voltage, the smaller must be the length of the capacitor shunt. Above 400 kV, the length of the shunt is getting too small and may be difficult to adjust in order to deliver the needed discharge to ignite the lamp.

The second type of systems is based on inductive technology and is working as a current transformer (CT) principle. Like any transformer, a CT has a primary winding which is formed by the conductor of the power AC line, and a secondary winding, which is formed by a coil attached to the power AC line.

However, the problem of conventional lighting systems based on inductive technology can be seen in the fact that the maximum acceptable current in the primary winding is limited by the lighting device which is attached around the primary winding. Hence, existing CT lighting systems cannot be used with all high voltage ranges.

JP2001268760A relates to an illuminating lamp mounted to an overhead lines, the lamp comprising a rest consisting of a cylindrical member for holding the line, a current transformer fixed to the rest, a plurality of light emitting units attached to a support, a controller for controlling the drive of a light emitting element, a solar cell, and a cylindrical case.

US3114893A relates to a device for marking with a high voltage alternating current overhead line, such device being of the kind wherein electrical energy is picked up by means of an auxiliary conductor disposed in the vicinity of one of the cables carrying the electric power, and an indicator or marker light is produced by a gaseous electric discharge tube which uses the potential differences existing between the auxiliary conductor, the cables of the line and earth.

Delta Box: "Obstruction lights high voltage lines", Retrieved from the Internet: URL:http://www.delta-box.com/en/wp-content/uploads/sites/2/2017/07/delta-box-lbia00ht-type-a-10-cd.pdf relates to an assembly light with multi-LEDs technology.

Therefore, there still exists a need for an aircraft light system that is long-term stable and can be used with a wide range of AC power cables.

This problem is solved by the subject matter of the independent claims. Advantageous embodiments of the invention are the subject matter of the dependent claims.

The present invention is based on the idea to provide a suspended light system for signalizing a power line to aircrafts, the lighting system comprising a jumper connection to be connected between two points of a power line, a secondary winding that surrounds a part of the jumper connection, and a lighting device with a base, the lighting device being connected to the secondary winding, so that the lighting device is powered by the power line. This allows to control the primary circuit versus the circuit of the main power line, thus keeping the primary circuit sufficiently small at any given circuit of the main power line.

An alternating current in the primary produces an alternating magnetic field in the core, which then induces an alternating current in the secondary. The primary circuit is largely unaffected by the insertion of the CT. Accurate transformers need close coupling between the primary and secondary to ensure that the current in the secondary is proportional to the current in the primary over a wide range. The current in the secondary is the current in the primary (assuming a single turn primary) divided by the number of turns of the secondary.

The secondary comprises an appropriate number of turns to transform the current in order to energize the lighting device.

In some embodiments of the invention, an electronic circuit is integrated into the base of the lighting device, wherein, when the current carried by the primary exceeds a certain predetermined level, the circuit switches off. Thereby, the circuit protects the lighting device against overloads generated by the secondary transformer.

In some embodiments of the invention, the secondary winding and the jumper are connected via a flexible conductor. The function of the flexible conductor lead is to maintain equipotential between the metallic body of the system and the conductor which is energized at hundreds of kilovolts.

In some embodiments of the invention, the lighting device operates within an indicative range of 10 A to 1000 A. This allows to use the lighting device at a range of currents carried by the power line without adjustments.

In some embodiments of the invention, the jumper connection is connectable to divide the current of the power line into a current (I_{d1}) through the main line parallel to the derived conductor and a derived current (I_{d2}) through the jumper connection.

In some embodiments of the invention, the power line has a transferred capacity of It = 100 to 3000 A, the factor f=I_{d1}/I_{d2}=5, and the current (I_{d2}) through the jumper connection is between 20 to 600 A. This allows using the lighting device at currents carried by the power line exceeding the maximum current useable for the secondary winding.

The current I_{d1} depends on the impedance Z1 of the connected section of the conductor of the line and is calculated from its linear electrical resistance. The current I_{d2} depends on the impedance Z3 of the lighting LED system and the impedance Z2 of the derived conductor. Both impedances Z2 and Z3 are connected in series. While the impedance Z3 of the lighting device is defined by the secondary winding, the impedance Z2 can be adjusted in order to obtain a factor f which will control I_{d2} within a range of 10 to 1000 A whatever is the transferred current of the line.

In some embodiments of the invention, the lighting device comprises a light emitting diode (LED). An LED provides more brightness (between 5 and 12 Candelas (Cd)) than a gas discharge lamp (3-4 Cd). An LED system is consequently more visible to aircrafts than a GDL.

In some embodiments of the invention, the jumper connection comprises a set of two pieces of conductors and one piece of conductor, connected with two additional bolted connectors, wherein one end of each of the pieces is connected with the main power line, the other end of each of the pieces is connected with the piece of conductor, the secondary winding surrounds a part of the piece of conductor, and the distance between the connectors and the conductor of the line is adjustable. This allows to adjust the impedance of the derived conductor.

A further problem is the installation of the system in consideration of the lose small components which must be assembled at a height of 10 to 20 meters and higher by a single operator and from a nacelle attached to a helicopter via an insulated rod. The helicopter must remain stabilized during the entire time of installation. This is why the installation time is critical to the success of the operation and must reduced as much as possible.

This problem is solved by a method of installation a suspended light system for signalization of a power line to aircrafts proposed here, the method comprising preassembling the light system and the secondary winding which comprises multiple pieces, fixing a collet fixture system on the power line, opening the secondary, installing the opened secondary on the collet, assembling the multiple pieces of the secondary winding to enclose the collet, and connecting the flexible conductor lead to the base of the lighting system with another fixture system.

The opened collet may have a "U" shape designed to the size of the conductor and fixed to the conductor with a screw using a screw-driver and a predetermined torque. This allows an easy fixation of the collet at the conductor.

Likewise, the multiple pieces of the secondary may be assembled together with screws. This allows to easily close the secondary winding.

The method of installing a suspended light system for signalization of a power line to aircrafts proposed here is based on the notion that the secondary winding comprises multiple pieces. This allows an easy installation of the secondary winding at the jumper connection.

In some embodiments of the invention, the secondary winding may be opened via releasing screws connecting the multiple pieces of the secondary winding. This allows an easy fixation of the secondary winding at the jumper connection in the preassembling stage.

In some embodiments of the invention, the jumper connection is connected between two points of the power line via a first clamp and a second clamp. This allows an easy installation of the jumper connection at the power line in the end assembling stage.

The present invention further provides a suspended light system for signalizing a power line to aircrafts, wherein an electronic circuit is integrated into the base of the lighting device, wherein the electronic circuit is configured such that, when the current carried by the power line exceeds a predetermined level, the circuit switches off the light system. Thereby, the light system can effectively be protected against current overloads.

The accompanying drawings are incorporated into and form a part of the specification to illustrate an advantageous embodiment of the present invention. These drawings together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. Further features and advantages will become apparent from the following more particular description of the various embodiments of the invention, as illustrated in the accompanying drawings, in which like references refer to like elements, and wherein:
- **Fig. 1**: shows a lighting device according to a first embodiment of the present invention;
- **Fig. 2**: shows a circuit diagram of a lighting device based on the CT principle according to Fig. 1;
- **Fig. 3**: shows a lighting device based on the CT principle with the secondary winding and the lighting device, the secondary winding being closed;
- **Fig. 4**: shows a lighting device based on the CT principle with the secondary winding and the lighting device, the secondary winding being open;
- **Fig. 5**: shows a lighting device based on the CT principle with the secondary winding and the lighting device, the secondary winding being open, the upper half of the secondary winding being attached to a power line;
- **Fig. 6**: shows a collet fixture system fixed to a conductor line;
- **Fig. 7**: shows a lighting device based on the CT principle according to a further embodiment;
- **Fig. 8**: shows a circuit diagram of the lighting device based on the CT principle according to Fig. 7.

In the following, the invention will be described in detail with reference to the Figures.

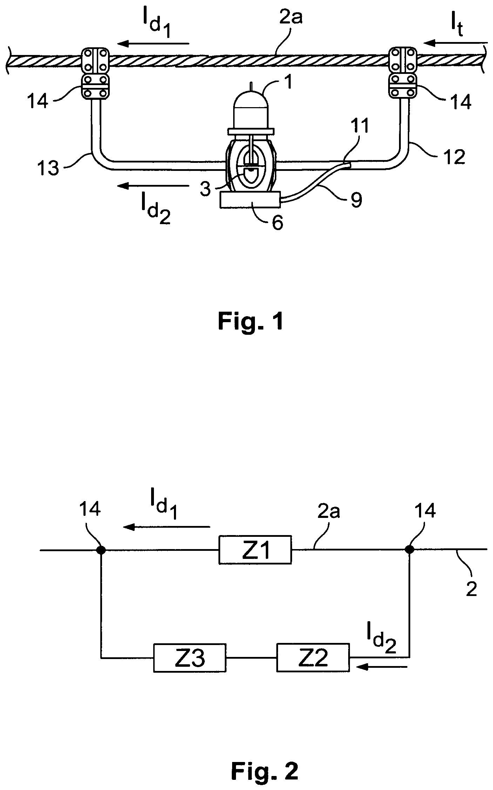

Fig. 1 shows a lighting device based on the current transformer (CT) principle where the lighting device is installed on a derived conductor 12. The derived conductor 12 divides the current Iₜ of the power line 2a into a current I_{d2} through the derived conductor 12 and a current I_{d1} through the part of the power line 2a parallel to the derived conductor 12.

The ends of the derived conductor are connected at two nodes 14 to the power line 2a. According to the present invention, the derived conductor 12 corresponds to the primary circuit, also referred to as the primary winding. The secondary winding with the lighting device 1 is installed on the derived conductor 12, which is also called "jumper" in the following.

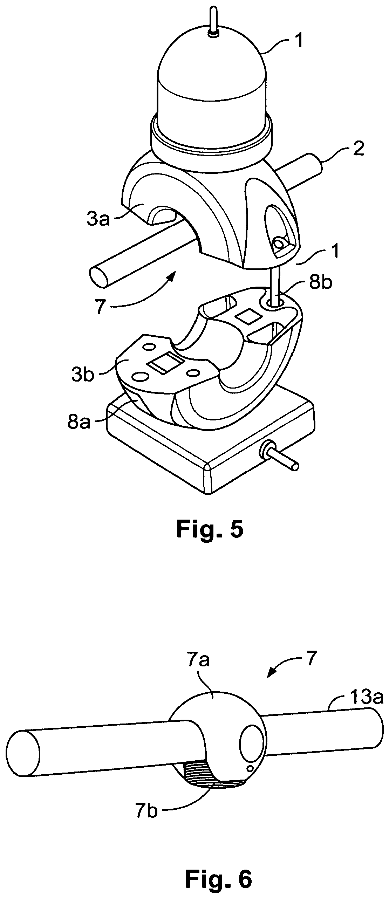

The light system 1 has a metallic housing, which is electrically connected to the jumper 12 via a flexible conductor lead 9. The function of the flexible conductor lead 9 is to maintain equipotential between the metallic body of the light system 1 and the conductor 2 which is energized at hundreds kilovolts. The flexible conductor lead 9 is connected to the jumper 12 at a connecting point 11 by means of a collet fixture system that will be explained in more detail with reference to Fig. 6.

Fig. 2 shows a schematic equivalent circuit diagram of the lighting system according to Fig. 1. The current I_{d1} depends on the impedance Z1 of the connected section of the conductor of the line 2. The current I_{d2} depends on the impedance Z3 of the lighting LED system 1 and the impedance Z2 of the derived conductor 12. Both impedances Z2 and Z3 are connected in series. While the impedance Z3 of the lighting device 1 is defined by the secondary winding 3, the impedance Z2 can be adjusted in order to obtain a factor f which will control I_{d2} within a range of 10 to 1000 A whatever is the transferred current Iₜ of the line 2.

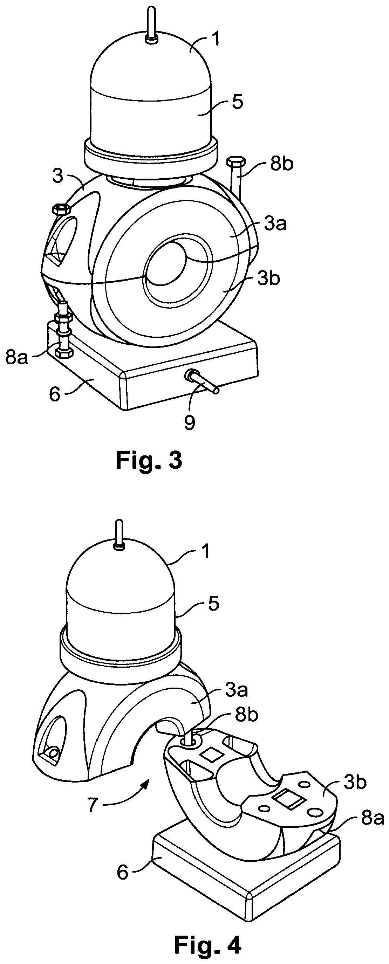

Fig. 3 to 5 show the lighting device 1 and a collet fixture system 7 to be installed on a conductor. The light system 1 comprises a lighting element 5, for instance having an LED. The lighting element 5 is powered by the secondary winding 3. In order to facilitate the assembly of the light system 1 on a conductor, the secondary winding 3 is arranged in two half shells 3a, 3b which are attached to each other by means of screw connections 8a, 8b. It is clear for a person skilled in the art that the secondary winding 3 may of course also be formed as one part or may be split into more than two segments.

Furthermore, the light system 1 comprises a base 6, which serves as a protective housing for electronic circuitry that is needed for driving the lighting element 5. Moreover, an electronic circuit can be integrated into the base 6 of the lighting device 1, wherein the electronic circuit is configured such that, when the current carried by the power line 2 exceeds a predetermined level, the circuit switches off the light system 1.

Fig. 6 shows that the opened collet 7a has a "U" shape. This shape is designed to the size of the conductor 2, is positioned on the conductor 2 and fixed with a screw 7b, using a screw-driver and applying a predetermined torque. The secondary winding is opened by releasing the screws 8a, 8b, installing the opened secondary 3a, 3b on the collet 7, assembling the multiple pieces of the secondary winding 3a, 3b, fixing them with the screws 8a, 8b to enclose the collet 7.

The flexible conductor lead 9 is connected to the base 6 of the lighting system 1 with another collet fixture system (not shown in the drawings).

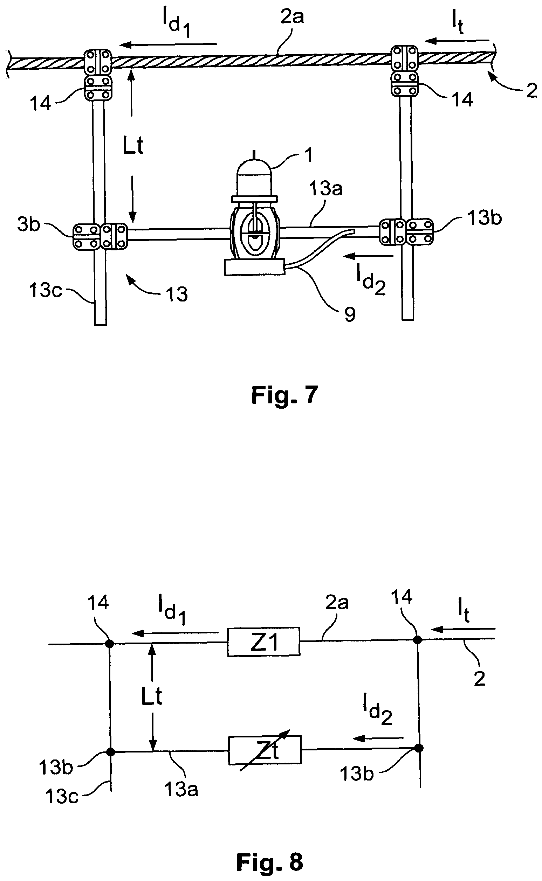

Fig. 7 and 8 show a variant of the invention proposed in order to more accurately adjust the total impedance Zₜ of the jumper connection 12. The derived conductor 12 is made of a set of pieces of conductors 13a and 13c connected with two additional bolted connectors 13b. When adjusting the distance Lₜ between the connectors 13b and the conductor of the line 2, the impedance Z2 becomes adjustable, as indicated in Fig. 8, and consequently Zt becomes adjustable as well. This variant allows larger ranges of whatever is the current capacity of the connected conductor of the line 2, and consequently the system will be adjustable over a wide range of conductors of the line 2 used.

### Reference numerals

| **Reference numeral** | **Description** |
|---|---|
| 1 | Light system |
| 2 | Conductor |
| 3 | Secondary winding |
| 3a, 3b | Half rings of secondary winding |
| 5 | Lighting element |
| 6 | Base |
| 7 | Collet fixture system |
| 7a | Opened collet |
| 7b | Collet screw |
| 8a, 8b | Screw |
| 9 | Flexible conductor lead |
| 11 | Connecting point with collet fixture system |
| 12 | Jumper connection; derived conductor |
| 13 | Piece of conductive material with "U" shape |
| 13a, 13c | Further pieces of conductors |
| 13b | Bolted connector |
| 14 | Connectors |
| Lt | Distance |
| It | Current carried by power line |
| I_{d1} | Current carried by jumper |
| I_{d2} | Current carried by piece of power line parallel to jumper |
| f | Factor |
| Z1 | Impedance of piece of power line parallel to jumper |
| Z2 | Impedance of derived conductor |
| Z3 | Impedance of lighting system |
| Zt | Total impedance |

## Claims

1. Suspended light system for signalizing a power line (2) to aircrafts, the lighting system comprising
a secondary winding (3, 3a, 3b),
and a lighting device (1) with a base (6), the lighting device being connected to the secondary winding (3a, 3b), so that during operation the lighting device (1) is powered by the power line (2);
**characterized by:**
a jumper connection (12) to be connected between two points of the power line (2) and wherein the secondary winding (3, 3a, 3b) surrounds a part of the jumper connection (12).

2. Suspended light system for signalizing a power line (2) to aircrafts according to claim 1, wherein an electronic circuit is integrated into the base (6) of the lighting device (1), wherein the electronic circuit is configured such that, when the current carried by the power line (2) exceeds a predetermined level, the circuit switches off the light system.

3. Suspended lighting system for signalizing a power line (2) to aircrafts according to claim 1 or 2, wherein the secondary winding (3a, 3b) is installed on a collet (7) surrounding a part of the jumper connection (12).

4. Suspended lighting system for signalizing a power line (2) to aircrafts according to one of the preceding claims, wherein the base (6) and the jumper (12) are connected via a flexible conductor lead (9).

5. Suspended lighting system for signalizing a power line to aircrafts according to claim 4, wherein one end of the flexible conductor (9) is fixed to the jumper (12) via a collet (7).

6. Suspended lighting system for signalizing a power line (2) to aircrafts according to one of the claims 1 to 5, wherein the lighting device (1) operates at currents between 10 A and 1000 A.

7. Suspended lighting system for signalizing a power line (2) to aircrafts according to one of the claims 1 to 6, wherein the jumper connection (12) is connectable to divide the current of the power line (2) into a current (I_{d1}) through the main line (2a) parallel to the derived conductor and a derived current (I_{d2}) through the jumper connection (12).

8. Suspended lighting system for signalizing a power line (2) to aircrafts according to one of the claims 1 to 7, wherein the power line (2) has a transferred current capacity of Iₜ = 100 to 3000 A, wherein a factor f=I_{d1}/I_{d2}=5, and wherein the current (I_{d2}) through the jumper connection (12) is in a range between 20 to 600 A.

9. Suspended lighting system for signalizing a power line (2) to aircrafts according to claims 1 to 8, wherein the lighting device (1) comprises a light emitting diode (LED).

10. Suspended lighting system for signalizing a power line (2) to aircrafts according to one of the claims 1 to 9, wherein the jumper connection (12) comprises a set of two pieces of first conductors (13c) and one piece of a second conductor (13a), connected with two additional bolted connectors (13b), wherein one end of each of the first pieces is configured to be connected with the main power line (2), the other end of each of the first pieces (13c) is connected with the second piece of conductor (13a), the secondary winding (3a, 3b) surrounds a part of the second piece of conductor (13a), and the distance (Lt) between the connectors (13b) and the conductor (2) of the line is adjustable.

11. Suspended lighting system for signalizing a power line (2) to aircrafts according to one of the claims 1 to 10, wherein the opened collet (7) has a "U" shape designed to the size of the conductor (2).

12. Method of installing a suspended light system (1) for signalization of a power line (2) to aircrafts according to one of the preceding claims, the method comprising the following steps:
preassembling the light system (1) and the secondary winding (3a, 3b), the secondary winding comprising at least two separate pieces (3a, 3b);
fixing a collet fixture system (7) on the power line (2);
opening the secondary winding (3a, 3b);
installing the opened secondary winding (3a, 3b) on the collet fixture system (7);
assembling the separate pieces of the secondary winding (3a, 3b) to enclose the collet fixture system (7)
**characterized by:**
connecting a jumper connection (12) between two points of the power line (2), wherein the secondary winding (3, 3a, 3b) surrounds a part of the jumper connection (12).

13. Method according to claim 12, further comprising the step of connecting the flexible conductor lead (9) to the base (6) of the light system (1) with another fixture system.

14. Method according to claim 12 or 13, wherein the separate pieces (3a, 3b) of the secondary winding are assembled together with screws (8a, 8b).

15. Method according to one of the claims 12 to 14, wherein the collet fixture system (7) comprises an open collet (7a) which is fixed to the conductor (2) with a screw (7b).

## Patentansprüche

1. Aufgehängtes Leuchtensystem zum Kennzeichnen einer Stromleitung (2) für Flugzeuge, wobei das Leuchtensystem umfasst:
eine Sekundärwicklung (3, 3a, 3b),
sowie eine Beleuchtungseinrichtung (1) mit einem Sockel (6), wobei die Beleuchtungseinrichtung mit der Sekundärwicklung (3a, 3b) so verbunden ist, dass die Beleuchtungseinrichtung (1) in Funktion von der Stromleitung (2) gespeist wird;
**gekennzeichnet durch**:
eine Überbrückungsverbindung (12), die zwischen zwei Punkte der Stromleitung (2) geschaltet ist, und wobei die Sekundärwicklung (3, 3a, 3b) einen Teil der Überbrückungsverbindung (12) umgibt.

2. Aufgehängtes Leuchtensystem zum Kennzeichnen einer Stromleitung (2) für Flugzeuge nach Anspruch 1, wobei eine elektronische Schaltung in den Sockel (6) der Beleuchtungseinrichtung (1) integriert ist, und die elektronische Schaltung so ausgeführt ist, dass die Schaltung das Leuchtensystem abschaltet, wenn der von der Stromleitung (2) geleitete Strom einen vorgegebenen Pegel übersteigt.

3. Aufgehängtes Leuchtensystem zum Kennzeichnen einer Stromleitung (2) für Flugzeuge nach Anspruch 1 oder 2, wobei die Sekundärwicklung (3a, 3b) an einer Klemmhülse (7) installiert ist, die einen Teil der Überbrückungsverbindung (12) umgibt.

4. Aufgehängtes Leuchtensystem zum Kennzeichnen einer Stromleitung (2) für Flugzeuge nach einem der vorangehenden Ansprüche, wobei der Sockel (6) und die Überbrückung (12) über eine flexible Durchführungsleitung (9) verbunden sind.

5. Aufgehängtes Leuchtensystem zum Kennzeichnen einer Stromleitung für Flugzeuge nach Anspruch 4, wobei ein Ende des flexiblen Leiters (9) über eine Klemmhülse (7) an der Überbrückung (12) befestigt ist.

6. Aufgehängtes Leuchtensystem zum Kennzeichnen einer Stromleitung (2) für Flugzeuge nach einem der Ansprüche 1 bis 5, wobei die Beleuchtungseinrichtung (1) bei Strömen zwischen 10 A und 1000 A arbeitet.

7. Aufgehängtes Leuchtensystem zum Kennzeichnen einer Stromleitung (2) für Flugzeuge nach einem der Ansprüche 1 bis 6, wobei die Überbrückungsverbindung (12) zum Aufteilen des Stroms der Stromleitung (2) in einen Strom (I_{d1}) durch die Hauptleitung (2a) parallel zu dem Abzweig-Leiter und einen Abzweig-Strom (I_{d2}) durch die Überbrückungsverbindung (12) geschaltet werden kann.

8. Aufgehängtes Leuchtensystem zum Kennzeichnen einer Stromleitung (2) für Flugzeuge nach einem der Ansprüche 1 bis 7, wobei die Stromleitung (2) eine Stromübertragungs-Belastbarkeit von Iₜ = 100 to 3000 A hat, ein Faktor f=I_{d1}/I_{d2}=5 gilt und der Strom (I_{d2}) durch die Überbrückungsverbindung (12) in einem Bereich zwischen 20 bis 600 A liegt.

9. Aufgehängtes Leuchtensystem zum Kennzeichnen einer Stromleitung (2) für Flugzeuge nach einem der Ansprüche 1 bis 8, wobei die Beleuchtungseinrichtung (1) eine Leuchtdiode (LED) umfasst.

10. Aufgehängtes Leuchtensystem zum Kennzeichnen einer Stromleitung (2) für Flugzeuge nach einem der Ansprüche 1 bis 9, wobei die Überbrückungsverbindung (12) einen Satz aus zwei Teilen erster Leiter (13c) und einem Teil eines zweiten Leiters (13a) umfasst, die mit zwei zusätzlichen Schraubverbindern (13b) verbunden sind, ein Ende jedes der ersten Teile so ausgeführt ist, dass es mit der Hauptstromleitung (2) verbunden ist, das andere Ende jedes der ersten Teile (13c) mit dem zweiten Leiter-Teil (13a) verbunden ist, die Sekundärwicklung (3a, 3b) einen Teil des zweiten Leiter-Teils (13a) umgibt, und der Abstand (Lt) zwischen den Verbindern (13b) und dem Leiter (2) der Leitung verstellt werden kann.

11. Aufgehängtes Leuchtensystem zum Kennzeichnen einer Stromleitung (2) für Flugzeuge nach einem der Ansprüche 1 bis 10, wobei die geöffnete Klemmhülse (7) eine "U"-Form hat, die auf die Größe des Leiters (2) ausgelegt ist.

12. Verfahren zum Installieren eines aufgehängten Leuchtensystems (1) zum Kennzeichnen einer Stromleitung (2) für Flugzeuge nach einem der vorangehenden Ansprüche, wobei das Verfahren die folgenden Schritte umfasst:
Vormontieren des Leuchtensystems (1) und der Sekundärwicklung (3a, 3b), wobei die Sekundärwicklung wenigstens zwei separate Teile (3a, 3b) umfasst;
Befestigen eines Klemmhülsen-Befestigungssystems (7) an der Stromleitung (2);
Öffnen der Sekundärwicklung (3a, 3b);
Installieren der geöffneten Sekundärwicklung (3a, 3b) an dem Klemmhülsen-Befestigungssystem (7);
Zusammensetzen der separaten Teile der Sekundärwicklung (3a, 3b), so dass sie das Klemmhülsen-Befestigungssystem umschließen (7),
**gekennzeichnet durch**:
Schalten einer Überbrückungsverbindung (12) zwischen zwei Punkte der Stromleitung (2), wobei die Sekundärwicklung (3, 3a, 3b) einen Teil der Überbrückungsverbindung (12) umgibt.

13. Verfahren nach Anspruch 12, das des Weiteren den Schritt zum Verbinden der flexiblen Durchführungsleitung (9) mit dem Sockel (6) des Leuchtensystems (1) mit einem anderen Befestigungssystem umfasst.

14. Verfahren nach Anspruch 12 oder 13, wobei die separaten Teile (3a, 3b) der Sekundärwicklung mit Schrauben (8a, 8b) zusammengesetzt werden.

15. Verfahren nach einem der Ansprüche 12 bis 14, wobei das Klemmhülsen-Befestigungssystem (7) eine offene Klemmhülse (7a) umfasst, die mit einer Schraube (7b) an dem Leiter (2) befestigt wird.

## Revendications

1. Système d'éclairage suspendu pour la signalisation d'une ligne d'alimentation (2) à des aéronefs, le système d'éclairage comprenant
un enroulement secondaire (3, 3a, 3b),
et un dispositif d'éclairage (1) avec une base (6), le dispositif d'éclairage étant connecté à l'enroulement secondaire (3a, 3b), de sorte que, pendant le fonctionnement, le dispositif d'éclairage (1) soit alimenté par la ligne d'alimentation (2) ;
**caractérisé par** :
une connexion de cavalier (12) devant être connectée entre deux points de la ligne d'alimentation (2) et
dans lequel l'enroulement secondaire (3, 3a, 3b) entoure une partie de la connexion de cavalier (12).

2. Système d'éclairage suspendu pour la signalisation d'une ligne d'alimentation (2) à des aéronefs selon la revendication 1, dans lequel un circuit électronique est intégré à la base (6) du dispositif d'éclairage (1), dans lequel le circuit électronique est configuré de sorte que, lorsque le courant transporté par la ligne d'alimentation (2) dépasse un niveau prédéterminé, le circuit éteigne le système d'éclairage.

3. Système d'éclairage suspendu pour la signalisation d'une ligne d'alimentation (2) à des aéronefs selon la revendication 1 ou 2, dans lequel l'enroulement secondaire (3a, 3b) est installé sur un collet (7) entourant une partie de la connexion de cavalier (12).

4. Système d'éclairage suspendu pour la signalisation d'une ligne d'alimentation (2) à des aéronefs selon l'une des revendications précédentes, dans lequel la base (6) et le cavalier (12) sont connectés via un fil conducteur souple (9).

5. Système d'éclairage suspendu pour la signalisation d'une ligne d'alimentation à des aéronefs selon la revendication 4, dans lequel une extrémité du conducteur souple (9) est fixée au cavalier (12) via un collet (7).

6. Système d'éclairage suspendu pour la signalisation d'une ligne d'alimentation (2) à des aéronefs selon l'une des revendications 1 à 5, dans lequel le dispositif d'éclairage (1) fonctionne à des courants compris entre 10 A et 1000 A.

7. Système d'éclairage suspendu pour la signalisation d'une ligne d'alimentation (2) à des aéronefs selon l'une des revendications 1 à 6, dans lequel la connexion de cavalier (12) peut être connectée pour diviser le courant de la ligne d'alimentation (2) en un courant (I_{d1}) à travers la ligne principale (2a) parallèle au conducteur dérivé et un courant dérivé (I_{d2}) à travers la connexion de cavalier (12).

8. Système d'éclairage suspendu pour la signalisation d'une ligne d'alimentation (2) à des aéronefs selon l'une des revendications 1 à 7, dans lequel la ligne d'alimentation (2) a une capacité de courant transféré Iₜ = 100 à 3000 A, dans lequel un facteur f= I_{d1}/I_{d2}=5, et dans lequel le courant (I_{d2}) à travers la connexion de cavalier (12) se trouve dans une plage comprise entre 20 et 600 A.

9. Système d'éclairage suspendu pour la signalisation d'une ligne d'alimentation (2) à des aéronefs selon les revendications 1 à 8, dans lequel le dispositif d'éclairage (1) comprend une diode électroluminescente (LED).

10. Système d'éclairage suspendu pour la signalisation d'une ligne d'alimentation (2) à des aéronefs selon l'une des revendications 1 à 9, dans lequel la connexion de cavalier (12) comprend un ensemble de deux pièces de premiers conducteurs (13c) et d'une pièce d'un deuxième conducteur (13a), connectées avec deux connecteurs boulonnés supplémentaires (13b), dans lequel une extrémité de chacune des premières pièces est configurée pour être connectée à la ligne d'alimentation principale (2), l'autre extrémité de chacune des premières pièces (13c) est connectée à la deuxième pièce de conducteur (13a), l'enroulement secondaire (3a, 3b) entoure une partie de la deuxième pièce de conducteur (13a), et la distance (Lt) entre les connecteurs (13b) et le conducteur (2) de la ligne est réglable.

11. Système d'éclairage suspendu pour la signalisation d'une ligne d'alimentation (2) à des aéronefs selon l'une des revendications 1 à 10, dans lequel le collet ouvert (7) a une forme en « U » adaptée à la taille du conducteur (2).

12. Procédé d'installation d'un système d'éclairage suspendu (1) pour la signalisation d'une ligne d'alimentation (2) à des aéronefs selon l'une des revendications précédentes, le procédé comprenant les étapes suivantes :
préassembler le système d'éclairage (1) et l'enroulement secondaire (3a, 3b), l'enroulement secondaire comprenant au moins deux pièces séparées (3a, 3b) ;
fixer un système de fixation à collet (7) sur la ligne d'alimentation (2) ;
ouvrir l'enroulement secondaire (3a, 3b) ;
installer l'enroulement secondaire ouvert (3a, 3b) sur le système de fixation à collet (7) ;
assembler les pièces séparées de l'enroulement secondaire (3a, 3b) pour enfermer le système de fixation à collet (7)
**caractérisé par** :
la connexion d'une connexion de cavalier (12) entre deux points de la ligne d'alimentation (2), où l'enroulement secondaire (3, 3a, 3b) entoure une partie de la connexion de cavalier (12).

13. Procédé selon la revendication 12, comprenant en outre l'étape de connexion du fil conducteur souple (9) à la base (6) du système d'éclairage (1) avec un autre système de fixation.

14. Procédé selon la revendication 12 ou 13, dans lequel les pièces séparées (3a, 3b) de l'enroulement secondaire sont assemblées avec des vis (8a, 8b).

15. Procédé selon l'une des revendications 12 à 14, dans lequel le système de fixation à collet (7) comprend un collet ouvert (7a) qui est fixé au conducteur (2) avec une vis (7b).
